# EUROPEAN PATENT SPECIFICATION

(11) **EP 3 626 982 B1**
(45) Date of publication and mention of the grant of the patent: **16.02.2022**
(21) Application number: 18195850.5
(22) Date of filing: 21.09.2018
(51) Int. Cl.: F16B 19/08

(54) **SELF-PIERCING RIVET**
STANZNIET
RIVET AUTO-POINÇONNEUR

(43) Date of publication of application: 25.03.2020
(73) Proprietor: Newfrey LLC, New Britain, CT 06053 (US)
(72) Inventor: BARTIG, Paul, 35394 Giessen (DE); WISSLING, Matthias, 35394 Gießen (DE)
(74) Representative: SBD IPAdmin

(56) References cited:
- EP-A1- 1 387 093
- DE-A1- 4 333 052
- DE-A1-102015 101 950
- US-A- 1 503 859
- US-A1- 2017 009 794
- US-A1- 2018 185 904
- US-B2- 9 316 243

## Description

The present disclosure relates to a self-piercing rivet, in particular a semi-hollow self-piercing rivet, for the production of a joining connection between at least two components, and notably between three components. The self-piercing rivet is used in particular to produce a joining connection between components or layers made of light-weight materials.

A self-piercing rivet is partially hollow with a head and a cylindrical shank that terminates in an annular edge. As the rivet is driven into at least two overlapping sheets of material over a suitably shaped die, the shank is caused to flare outwardly. The sheets of material are caused to deform around the shank, creating an annulus that encapsulates the shank. The shank and edge of the rivet remain embedded in the sheet material after the rivet has been set. Self-piercing riveting enables sheet material to be joined without the requirement for the pre-drilling or pre-punching of a hole in the material.

The punch riveting as a joining method is widely used in the industry. Especially in the manufacturing of automobiles where light-weight materials, such as aluminium or high-strength steel, magnesium sheets, plastic, carbon fiber reinforced plastic and similar materials, have been adopted for vehicle body panels in the interests of weight reduction and therefore reduced energy consumption. Aluminium is notably difficult or not feasible to spot weld, particularly to steel, owing to its high thermal conductivity, low melting range and propensity to form oxide surface film. Therefore, always new demands are being placed on punch-rivet connections. EP1387093 discloses a self-piercing rivet adapted to obtain sufficient undercut for the fixation of the rivet in the workpiece. DE102015101950 is directed to a self-piercing rivet for high-strength workpieces having an angled shank end face.

Numerous documents describe a self-piercing rivet particularly suitable for joining light-weight materials.

WO2014013232 discloses a method for forming a joint in a stack of at least two sheets of light metal alloy, using a self- piercing rivet that is fully hollow. The rivet is coated at least along a portion of its bore by a lubricant and pierces the upper surface thereof and such that the shank deforms outwardly to interlock with the material but without penetration to the die side of the material. The outside diameter of the shank of the rivet is 5.4mm or less. The die has a volume that is less than 60% or 70% of the effective solid volume of the rivet.

US9316243 describes a self-piercing rivet comprising a head and a substantially cylindrical shank that is at least partially hollow so as to define a bore that extends along at least part of its length, wherein the outside diameter of the shank is at least 6 mm, the effective length of the rivet is at least 1.3 times the diameter of the shank and the bore has a volume that is at least 38% of the effective solid volume of the rivet. Such rivet is suitable for use with thick stack, high strength light metal alloys such as magnesium and aluminium alloys.

US2017009794 is directed to a self-piercing rivet, in particular a semi-hollow self-piercing rivet, for the production of a joining connection between at least two components, in particular for the production of a joining connection between a component made of high-strength steel and a component made of a thick-walled aluminum sheet or cast aluminum, as well as a method therefor. The self-piercing rivet comprises a rivet head and a rivet shank having a central shank bore, wherein the rivet head has an upper side having a predetermined head diameter. The rivet shank comprises a cylindrical shank outer surface and a shank inner surface limiting the central shank bore. The shank outer surface and the shank inner surface are connected at the axial end of the rivet shank facing away from the rivet head by a flat shank end face and a shank end radius, and the shank end radius transitions tangentially into the shank inner surface, is at least twice as great as the maximum radial width of the rivet shank. The plane shank end face is connected to the shank outer surface by a cutting edge, and a ratio of maximum radial width of the rivet shank to the radial shank end surface width is in the range of 1.5 to 2.5. Due to the specific geometry of the rivet shank, the self-piercing rivet is given sufficient axial stability for punching through a high-strength top layer. At the same time, the construction of the rivet base provides a sufficiently blunt geometry to penetrate the high-strength top layer with a sufficiently sharp or acute geometry for entering a softer further material layer compared to the high-strength top layer.

The above described geometries of self-piercing rivets are adapted to the joining connections in high-strength components or aluminum components. However, a need still exists to increase the joining quality and to develop a self-piercing rivet adapted to form a joining connection between new materials, and notably brittle materials or stack of more than two components. More particularly a brittle material shows a very low elongation because it does not (or very little) plastically deform. For instance, materials to be joined may present an elongation lower than 15% or even lower than 12%.

The above-mentioned object is achieved by the self-piercing rivet defined in independent patent claim 1.

The self-piercing rivet for producing a joining connection between at least two or three components comprises a rivet head and a rivet shank. The rivet shank has a central bore comprising a base, a cylindrical shank outer surface and a shank inner surface limiting the central shank bore. An annular piercing end is provided on the rivet shank away from the rivet head. The shank outer surface has a first diameter, the shank bore comprises a bore depth between the base of the central shank bore and the annular piercing end. The ratio of the first diameter to the bore depth is in the range of 0.50 to 0.67.

The formed self-piercing rivet is characterized by its special geometry of its rivet shank which allows a lower insertion force and a lower die volume. It was known from the state of the art to manufacture self-piercing rivets with geometries complying with special bore depth or rivet length, or special ratios between the rivet length and the rivet diameter. However, several tests have surprisingly shown that a self-piercing rivet geometry having a ratio of the shank outer surface diameter to the bore depth between 0.5 and 0.67 allows to perform a rivet having good joining qualities, notably for brittle materials such as aluminium alloys and stack of three components. Such ratio is particularly advantageous, since it allows a reduction of the rivet volume. The rivet volume being reduced, the weight of the rivet is lower than usual. Besides, the reduction of the rivet volume leads to a reduction of the die volume. The lower die volume allows the connection of brittle materials which can be arranged on the die side for the joining connection. A ratio of the first diameter to the bore depth smaller than 0,5 does not provide adequate results since this would be a complete hollow rivet or a rivet with a very thin head thickness. If the rivet is completely hollow all the "dust" (e.g. coating material that is wiped of the rivet and the sheets during the setting process) would come out at the top of the joint which could causes problems in the later car production and due to visual requirements car manufacturers prefer a flat joint appearance. If the head thickness is very thin it cannot be produced in a robust way by a cold-forming process (indeed, the cold forming forces would be too high).

In one embodiment, the ratio of the first diameter Ds to the bore depth T is in the range of 0.58≦Ds/T≦0.67, and more particularly of 0.58≦Ds/T≦0.63. Tests performed by the inventors have established that such ratio provides an even better joining quality.

In one embodiment, the first diameter is of 5,3 mm. Self-piercing rivets with such diameters have a reduced weight and the force required to insert the rivet is low.

In one embodiment, the base is conical or frustroconical with an arcuate transition of radius R2 between the periphery of the base and the shank inner surface. In another embodiment, the base can be rounded. The self-piercing rivet manufacturing is thus simplified.

In one embodiment, the radius R2 is between 0.35 and 0.4 mm. Such radius simplifies the manufacturing.

According to the invention, the shank outer surface and the shank inner surface are connected at the annular piercing end by a shank end face and a shank end radius R3.

In one embodiment, the shank end radius is comprised between 1.2 and 1.4 mm. Notably, the shank end radius is of 1.3 mm. Such shank end radius allows a good penetration of the self-piercing rivet into the material and improve the material flow.

In one embodiment, a conical taper surface is arranged between the shank end radius and the shank end face, and wherein the conical taper surface has an inclusive angle of 90 degrees. A conical entrance is thus performed.

According to the invention, the shank end face is arcuate, and wherein the arcuate shank end face comprises a radius of curvature between 0.15 and 0.3 mm. Such arcuate shank end allows a good material penetration. In an example, which is not covered by the claimed invention, the shank end face is flat. A self-piercing rivet with a flat shank end face is more robust and does not collapse.

In one embodiment, the head has an upper portion and a transition region defined between the upper portion and the shank, the transition region having a radius of curvature in the range 2.1 to 2.3 mm, and in particular of 2.2 mm. The stress in the material is thus reduced. Besides, the feeding technology remains unchanged with regard to prior rivets. In another embodiment, the transition region may have a radius of curvature in the range of 0.5 to 2.3 mm. A low radius of curvature allows to minimize the setting forces.

In one embodiment, the head has an upper surface opposite the base and the thickness between the base and the upper surface is comprised between 1.5 and 3.5 mm. The smaller the radius of curvature in the transition region is, the greater the thickness tends to be. Besides, the rivet head comprises an upper portion having a height h along a longitudinal axis between 0.2 mm and 0.6 mm, and in particular of 3 mm.

In one embodiment, the bore depth T is between 8 mm and 9 mm.

In one embodiment, the rivet shank extends along a longitudinal axis, and wherein the annular piercing end has a length along the longitudinal axis of less than 0.3 mm.

The self-piercing rivet is suitable for forming a joining connection in a stack of three components.

The present invention is also directed to a self-piercing rivet joint with an upper workpiece and a lower workpiece, wherein the lower workpiece is formed from a brittle material, and with a self-piercing rivet as described above.

The self-piercing rivet is used in a system comprising a punch, a die and a stack of materials. The material facing the die can be a brittle material. For instance, the material may have an elongation smaller than 15% or in particular smaller than 12%. For example, cast aluminium, aluminium sheets or profiles may be implemented. Other materials such as high-strength steel, magnesium sheets, plastic, carbon fiber reinforced plastic and similar materials can also be used. The volume of the die corresponds to 100% to 120% of the self-piercing rivet volume.

Specific embodiments of the present invention will now be described, by way of example only, with reference to the accompanying drawings in which:
Figure 1 shows a sectioned view of a first embodiment of a self-piercing rivet according to the present invention;
Figure 2 is a close-up view of the area of the rivet labelled II in figure 1;
Figure 3 shows a sectioned view of an example, which is not covered by the claimed invention, of a self-piercing rivet according to the present invention;
Figure 4A and Figure 4B show sectioned views through two riveted joints prepared for comparative purposes: one using a prior art self-piercing rivet (Fig. 4A) and the other using a self-piercing rivet in accordance with the present invention (Fig. 4B).

On the different figures, the same reference signs designate identical or similar elements.

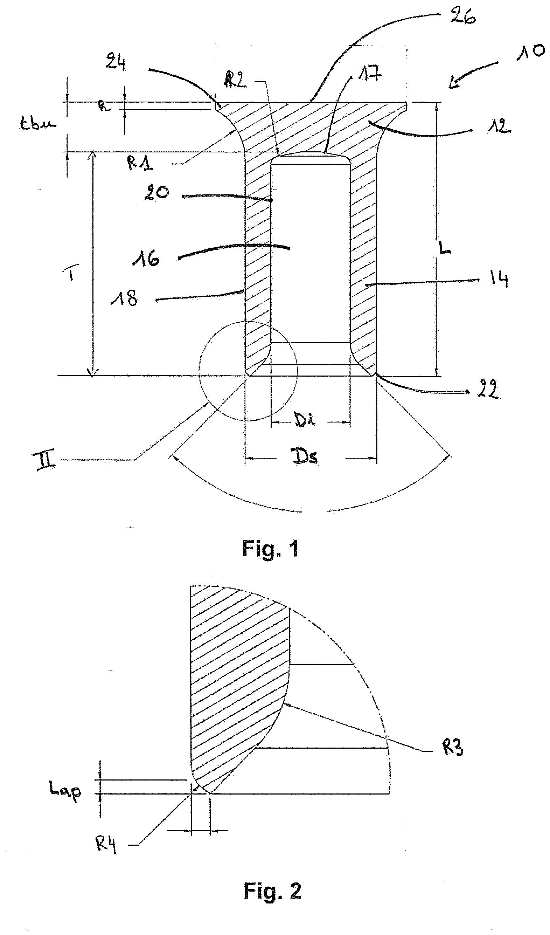

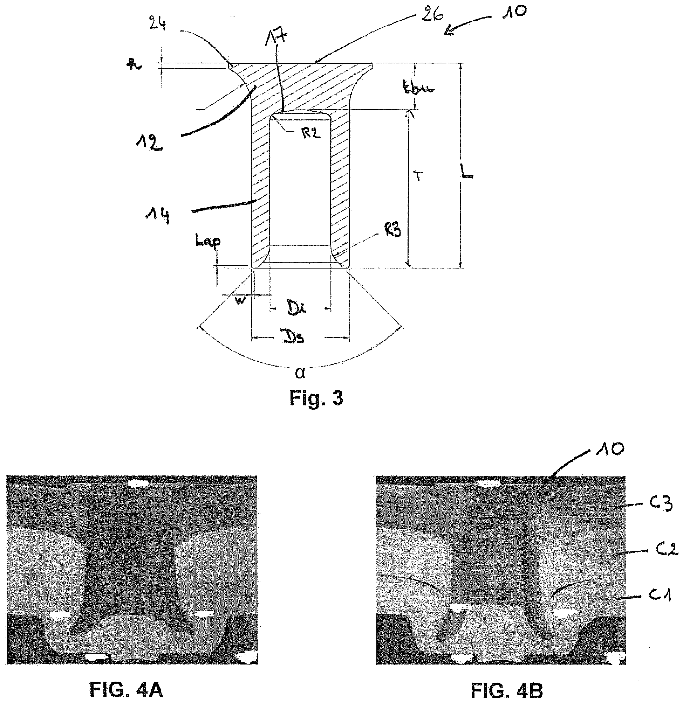

Fig. 1 and Fig. 3 show a self-piercing rivet 10 comprising a rivet head 12 and a rivet shank 14 extending along a longitudinal axis. The self-piercing rivet 10 is suitable for producing a joining connection between at least two components, and notably between three components C1, C2, C3, such as aluminium components or sheets of aluminium, as shown on Fig. 4B.

The rivet shank 14 comprises a central shank bore 16 having a base 17. The rivet shank 14 further comprises a cylindrical shank outer surface 18 and a shank inner surface 20 limiting the central shank bore. The shank outer surface has a first diameter Ds. The shank inner surface 20 has a second diameter Di. The rivet shank 14 further comprises an annular piercing end 22 facing away from the rivet head 12. The central shank bore comprises a bore depth T between the base of the central shank bore and the annular piercing end. More particularly the bore depth T is the greatest distance along the longitudinal axis between the base 17 and the annular piercing end 22. For instance, the bore depth T is the distance between the most upper point of the surface of the base (in other words the point of the base situated the nearest of the upper surface of the head) and the most lower point of the annular piercing end 22.

The geometry of the self-piercing rivet is such that a ratio of the first diameter Ds to the bore depth T is in the range of 0.50≦Ds/T≦0.67. More particularly, the ratio can be in the range of 0.58 or 0,59 to 0.67 or to 0.66. Thus, the geometry of the rivet is defined through the ratio outside diameter bore depth and not through other parameters like the rivet length L.

The rivet head 12 extends radially outward from the rivet shank 14. The rivet head 12 has an upper portion 24 and a transition region defined between the upper portion 24 and the rivet shank 14. The transition region has a radius of curvature R1 in the range 2.1 to 2.3 mm, and in particular of 2.2 mm. The upper portion 24 has an upper surface 26 opposite the base 17. The thickness tbu between the base 17 and the upper surface 26 is comprised between 1.5 and 3.5 mm. The upper portion 24 of the rivet head 12 has a height h along the longitudinal axis.

As illustrated in the drawings, the base 17 can be conical or frustroconical. The base can also be rounded. The base can be provided with an arcuate transition of radius R2 between the periphery of the base and the shank inner surface. The radius R2 is between 0.35 and 0.4 mm.

The shank inner surface 20 extends parallel to the longitudinal axis from the base until the annular piercing end 22. The shank outer surface 18 and the shank inner surface 20 are connected at the annular piercing end by a shank end face 28 and a shank end radius R3, as illustrated in Fig. 2 and Fig. 3. The shank end radius R3 is between 1.2 and 1.4 millimeters (mm). For example, the shank end radius is of 1.3 mm.

The shank end face can be a flat shank end face, as depicted on Fig. 3, which is not covered by the claimsed invention. The flat shank end face has a width w along an axis perpendicular to the longitudinal axis. The shank end face in accordance with the claimed invention is an arcuate shank end face with a radius R4, as illustrated in Fig. 1. The radius R4 is between 0.15 and 0.3 mm. A conical taper surface is arranged between the shank end radius R3 and the shank end face. The conical taper surface has an inclusive angle α of 90 degrees.

The annular piercing end has a length Lap along the longitudinal axis of less than 0.3 mm.

As described above, in the first embodiment represented in Fig. 1 and Fig. 2, the self-piercing rivet has an arcuate shank end face with a radius of curvature R4.

In a first alternative, the self-piercing rivet according to the first embodiment has the following dimensions:

| | |
|---|---|
| Ds | 5.3 mm |
| Di | 3.2 mm |
| α | 90 Deg. |
| T | 9 mm |
| h | 0.3 mm |
| tbu | 2 mm |
| R1 | 2.20 mm |
| R2 | 0.35 mm |
| R3 | 1.25 mm |
| R4 | 0.3 mm |

In a second alternative, the self-piercing rivet according to the first embodiment has the following dimensions:

| | |
|---|---|
| Ds | 5.3 mm |
| Di | 3.2 mm |
| α | 90 Deg. |
| T | 9 mm |
| h | 0.3 mm |
| tbu | 2 mm |
| R1 | 2.2 mm |
| R2 | 0.4 mm |
| R3 | 1.3 mm |
| R4 | 0.15-0.3 mm |

In an example, which is not covered by the claimed invention, the self-piercing rivet according to the first embodiment has the following dimensions:

| | |
|---|---|
| Ds | 5.3 mm |
| Di | 3.26 mm |
| α | 90 Deg. |
| T | 8.5 mm |
| h | 0.3 mm |
| tbu | 2.5 mm |
| R1 | 2.2 mm |
| R2 | 0.35 mm |
| R3 | 1.25 mm |
| R4 | 0.15 mm |

In the example, which is not covered by the claimed invention, represented in Fig. 3, the self-piercing rivet has a flat shank end face.

In a further example, which is not covered by the claimed invention, the self-piercing rivet according to the second embodiment has the following dimensions:

| | |
|---|---|
| Ds | 5.3 |
| Di | 3.3 |
| α | 90 Deg. |
| T | 8.5 mm |
| h | 0.3 mm |
| tbu | 2.5 mm |
| R1 | 2.2 mm |
| R2 | 0.4 mm |
| R3 | 1.3 mm |
| w | 0.3 mm |

In a further example, which is not covered by the claimed invention, the self-piercing rivet according to the second embodiment has the following dimensions:

| | |
|---|---|
| Ds | 5.3 |
| Di | 3.3 |
| α | 90 Deg. |
| T | 8.5 mm |
| h | 0.3 mm |
| tbu | 3.5 mm |
| R1 | 2.2 mm |
| R2 | 0.4 mm |
| R3 | 1.3 mm |
| w | 0.3 mm |

Referring now to Fig. 4A and Fig. 4B of the drawings, there is shown a joint formed in a stack of three sheets of brittle aluminium alloy by a self-piercing rivet. Fig. 4A represents a joint formed in a stack of three sheets of aluminium by a self-piercing rivet of the prior art. Fig. 4B represents a joint formed in a stack of three sheets of aluminium by a self-piercing rivet according to the present invention.

On Fig. 4A, the prior art self-piercing rivet has a first diameter to the bore depth ratio higher than 0.7. The joint section in fig. 4A reveals that such a structure with new relatively brittle aluminum alloys cannot be jointed with self-piercing riveting with rivets from the state of the art. Indeed, with such rivets, the remaining bottom sheet material thickness is too thin which causes cracks in a serial production environment. Additionally, the setting force is very high and exceeds the upper force tolerance of currently known und used self-piercing riveting equipment, and without this high force the interlock would be too small.

The self-piercing rivet of Fig. 4B is according to the present invention. In contrast to Fig. 4A, Fig. 4B shows a well-performed joint. Through the shaft diameter to the bore depth ratio according the present invention, the remaining material thickness is significantly higher (no risks of cracks) and the setting forces are significantly lower. This allows reducing the die volume and thus reducing the deformation in the lower sheet material (also even less ductile materials can be jointed).

Thus, the self-piercing rivet according to the invention allows the self-piercing riveting assembly range to be increased.

## Claims

1. Self-piercing rivet (10) for producing a joining connection between at least two components (C1, C2, C3) comprising:
a. a rivet head (12) and a rivet shank (14) having a central shank bore comprising a base,
b. the rivet shank (14) comprises a cylindrical shank outer surface and a shank inner surface limiting the central shank bore, the rivet shank (14) comprises an annular piercing end (22) facing away from the rivet head (12),
c. the shank outer surface has a first diameter (Ds), the central shank bore comprises a bore depth (T) between the base (17) of the central shank bore and the annular piercing end (22),
**characterized in that** a ratio of the first diameter (Ds) to the bore depth (T) is in the range of 0.50≦Ds/T≦0.67, wherein the shank outer surface and the shank inner surface are connected at the annular piercing end (22) by a shank end face and a shank end radius, wherein the shank end face is arcuate, and wherein the arcuate shank end face comprises a radius of curvature (R4) between 0.15 and 0.3 mm .

2. Self-piercing rivet (10) according to claim 1, wherein the ratio of the first diameter (Ds) to the bore depth (T) is in the range of 0.58≦Ds/T≦0.63.

3. Self-piercing rivet (10) according to claim 1 or 2, wherein the first diameter (D1) is of 5,3 mm.

4. Self-piercing rivet (10) according to any of claims 1 to 3, wherein the base is conical or frustroconical with an arcuate transition of radius (R2) between the periphery of the base and the shank inner surface.

5. Self-piercing rivet (10) according to claim 4, wherein the radius (R2) is between 0.35 and 0.4 mm.

6. Self-piercing rivet (10) according to any of claims 1 to 5, wherein the shank end radius (R3) is comprised between 1.2 and 1.4 mm.

7. Self-piercing rivet (10) according to claim 6, wherein the shank end radius (R3) is of 1.3 mm.

8. Self-piercing rivet (10) according to any of claims 1 to 7, wherein a conical taper surface is arranged between the shank end radius and the shank end face, and wherein the conical taper surface has an inclusive angle (α) of 90 degrees.

9. Self-piercing rivet (10) according to any of the preceding claim, wherein the head has an upper portion and a transition region defined between the upper portion and the shank, the transition region having a radius of curvature in the range 2.1 to 2.3 mm, and in particular of 2.2 mm.

10. Self-piercing rivet (10) according to any of the preceding claim, wherein the head (12) has an upper surface opposite the base and the thickness (tbu) between the base and the upper surface is comprised between 1.5 and 3.5 mm.

11. Self-piercing rivet (10) according to any of the preceding claim, wherein the rivet shank (14) extends along a longitudinal axis, and wherein the annular piercing end (22) has a length along the longitudinal axis of less than 0.3 mm.

12. Self-piercing rivet joint with an upper workpiece and a lower workpiece, wherein the lower workpiece is formed from a brittle material, and with a self-piercing rivet according to any of claims 1 to 11.

## Patentansprüche

1. Stanzniet (10) zur Herstellung einer Fügeverbindung zwischen mindestens zwei Komponenten (C1, C2, C3), umfassend:
a) einen Nietkopf (12) und einen Nietschaft (14), der eine zentrale Schaftbohrung aufweist, die eine Basis umfasst,
b) wobei der Nietschaft (14) eine zylindrische Schaftaußenfläche und eine Innenfläche umfasst, die eine zentrale Schaftbohrung begrenzt, wobei der Nietschaft (14) ein von dem Nietkopf (12) wegschauendes, ringförmiges Stanzende (22) umfasst,
c) wobei die Schaftaußenfläche einen ersten Durchmesser (Ds) aufweist, wobei die zentrale Schaftbohrung eine Bohrungstiefe (T) zwischen der Basis (17) der zentralen Schaftbohrung und dem ringförmigen Stanzende (22) umfasst,
**dadurch gekennzeichnet, dass** ein Verhältnis des ersten Durchmessers (Ds) zu der Bohrungstiefe (T) in dem Bereich von 0,50≦Ds/T≦0,67 liegt, wobei die Schaftaußenfläche und die Schaftinnenfläche an dem ringförmigen Stanzende (22) durch eine Schaftstirnfläche und einen Schaftendradius verbunden sind, wobei die Schaftstirnfläche bogenförmig ist, und wobei die bogenförmige Schaftstirnfläche einen Krümmungsradius (R4) zwischen 0,15 und 0,3 mm umfasst.

2. Stanzniet (10) nach Anspruch 1, wobei das Verhältnis des ersten Durchmessers (Ds) zu der Bohrungstiefe (T) im Bereich von 0,58≦Ds/T≦0,63 liegt.

3. Stanzniet (10) nach Anspruch 1 oder 2, wobei der erste Durchmesser (D1) 5,3 mm ist.

4. Stanzniet (10) nach einem der Ansprüche 1 bis 3, wobei die Basis konisch oder kegelstumpfförmig ist mit einem bogenförmigen Übergang des Radius (R2) zwischen dem Umfang der Basis und der Schaftinnenfläche.

5. Stanzniet (10) nach Anspruch 4, wobei der Radius (R2) zwischen 0,35 mm und 0,4 mm ist.

6. Stanzniet (10) nach einem der Ansprüche 1 bis 5, wobei der Schaftendradius (R3) zwischen 1,2 mm und 1,4 mm beträgt.

7. Stanzniet (10) nach Anspruch 6, wobei der Schaftendradius (R3) 1,3 mm beträgt.

8. Stanzniet (10) nach einem der Ansprüche 1 bis 7, wobei eine konische Kegelfläche zwischen dem Schaftendradius und der Schaftstirnfläche angeordnet ist, und wobei die konische Kegelfläche einen Einschlusswinkel (a) von 90 Grad aufweist.

9. Stanzniet (10) nach einem der vorstehenden Ansprüche, wobei der Kopf einen oberen Abschnitt und eine zwischen dem oberen Abschnitt und dem Schaft definierte Übergangsregion aufweist, wobei die Übergangsregion einen Krümmungsradius im Bereich von 2,1 bis 2,3 mm aufweist, und insbesondere von 2,2 mm.

10. Stanzniet (10) nach einem der vorstehenden Ansprüche, wobei der Kopf (12) eine der Basis gegenüberliegende Oberseite aufweist und die Dicke (tbu) zwischen der Basis und der Oberseite zwischen 1,5 und 3,5 mm beträgt.

11. Stanzniet (10) nach einem der vorstehenden Ansprüche, wobei sich der Nietschaft (14) entlang einer Längsachse erstreckt, und wobei das ringförmige Stanzende (22) eine Länge entlang der Längsachse von weniger als 0,3 mm aufweist.

12. Stanznietverbindung mit einem oberen Werkstück und einem unteren Werkstück, wobei das untere Werkstück aus einem spröden Material gebildet ist, und mit einem Stanzniet nach einem der Ansprüche 1 bis 11.

## Revendications

1. Rivet auto-perceur (10) pour produire une connexion par jonction entre au moins deux composants (C1, C2, C3) comprenant :
a) une tête de rivet (12) et une tige de rivet (14) ayant un trou de tige central comprenant une base,
b) la tige de rivet (14) comprend une surface externe de tige cylindrique et une surface interne de tige limitant le trou de tige central, la tige de rivet (14) comprend une extrémité de perçage annulaire (22) orientée dans le sens opposé à la tête de rivet (12),
c) la surface externe de tige a un premier diamètre (Ds), le trou de tige central comprend une profondeur de trou (T) entre la base (17) du trou de tige central et l'extrémité de perçage annulaire (22),
**caractérisé en ce qu'**un rapport du premier diamètre (Ds) à la profondeur de trou (T) se trouve dans la plage de 0,50≦Ds/T≦0,67, dans lequel la surface externe de tige et la surface interne de tige sont connectées à l'extrémité de perçage annulaire (22) par une face d'extrémité de tige et un rayon d'extrémité de tige, dans lequel la face d'extrémité de tige est courbée, et dans lequel la face d'extrémité de tige courbée comprend un rayon de courbure (R4) entre 0,15 et 0,3 mm .

2. Rivet auto-perceur (10) selon la revendication 1, dans lequel le rapport du premier diamètre (Ds) à la profondeur de trou (T) se trouve dans la plage de 0,58≦Ds/T≦0,63.

3. Rivet auto-perceur (10) selon la revendication 1 ou 2, dans lequel le premier diamètre (D1) est de 5,3 mm.

4. Rivet auto-perceur (10) selon l'une quelconque des revendications 1 à 3, dans lequel la base est conique ou tronconique avec une transition de rayon (R2) courbée entre la périphérie de la base et la surface interne de tige.

5. Rivet auto-perceur (10) selon la revendication 4, dans lequel le rayon (R2) se situe entre 0,35 et 0,4 mm.

6. Rivet auto-perceur (10) selon l'une quelconque des revendications 1 à 5, dans lequel le rayon d'extrémité de tige (R3) est compris entre 1,2 et 1,4 mm.

7. Rivet auto-perceur (10) selon la revendication 6, dans lequel le rayon d'extrémité de tige (R3) est de 1,3 mm.

8. Rivet auto-perceur (10) selon l'une quelconque des revendications 1 à 7, dans lequel une surface conique est agencée entre le rayon d'extrémité de tige et la face d'extrémité de tige, et dans lequel la surface conique a un angle inclusif (a) de 90 degrés.

9. Rivet auto-perceur (10) selon l'une quelconque des revendications précédentes, dans lequel la tête a une partie supérieure et une région de transition définie entre la partie supérieure et la tige, la région de transition ayant un rayon de courbure dans la plage de 2,1 à 2,3 mm, et en particulier de 2,2 mm.

10. Rivet auto-perceur (10) selon l'une quelconque des revendications précédentes, dans lequel la tête (12) a une surface supérieure opposée à la base et l'épaisseur (tbu) entre la base et la surface supérieure est comprise entre 1,5 et 3,5 mm.

11. Rivet auto-perceur (10) selon l'une quelconque des revendications précédentes, dans lequel la tige de rivet (14) s'étend le long d'un axe longitudinal, et dans lequel l'extrémité de perçage annulaire (22) a une longueur le long de l'axe longitudinal de moins de 0,3 mm.

12. Rivet auto-perceur (10) avec une pièce ouvrée supérieure et une pièce ouvrée inférieure, dans lequel la pièce ouvrée inférieure est formée d'un matériau friable, et avec un rivet auto-perceur selon l'une quelconque des revendications 1 à 11.
